# FASCICULE DE BREVET EUROPEEN

(11) **EP 3 730 334 B1**
(45) Date de publication et mention de la délivrance du brevet: **21.09.2022**
(21) Numéro de dépôt: 20171079.5
(22) Date de dépôt: 23.04.2020
(51) Int. Cl.: B60K 35/00, B60K 37/06, B60H 1/00

(54) **DISPOSITIF DE CONTRÔLE POUR VÉHICULE AUTOMOBILE, VÉHICULE AUTOMOBILE, PROCÉDÉ DE CONTRÔLE ET PROGRAMME D'ORDINATEUR ASSOCIÉS**
KONTROLLVORRICHTUNG FÜR KRAFTFAHRZEUG, ENTSPRECHENDES KRAFTFAHRZEUG, KONTROLLVERFAHREN UND COMPUTERPROGRAMM
DEVICE FOR CONTROLLING FOR A MOTOR VEHICLE, ASSOCIATED MOTOR VEHICLE, CONTROL METHOD AND COMPUTER PROGRAM

(30) Priorité: 25.04.2019 FR 1904368
(43) Date de publication de la demande: 28.10.2020
(73) Titulaire: TRANSDEV GROUP INNOVATION, 92130 Issy-les-Moulineaux (FR)
(72) Inventeur: DARNAUD, Thomas, 78000 VERSAILLES (FR)
(74) Mandataire: Lavoix

(56) Documents cités:
- EP-A1- 3 025 921
- DE-A1-102017 202 257
- JP-A- 2009 251 388
- US-A1- 2018 319 299

## Description

La présente invention concerne un dispositif de contrôle pour un véhicule automobile, ainsi qu'un véhicule automobile comportant un tel dispositif de contrôle. La présente invention concerne également un procédé de contrôle d'un véhicule automobile ainsi qu'un programme d'ordinateur comportant des instructions logicielles mettant en œuvre un tel procédé.

De nombreux véhicules comportent un compartiment passager destiné à accueillir un ou plusieurs passagers. Ces compartiments passagers comportent de nombreux équipements destinés à rendre des services aux passagers, c'est-à-dire à effectuer des actions ne relevant pas du pilotage du véhicule mais participant à améliorer l'expérience des passagers présents dans le véhicule. Ces équipements de service aux passagers comportent par exemple des sièges, des écrans d'affichage, des haut-parleurs diffusant de la musique ou des annonces sonores, ou encore des dispositifs de régulation de la température dans le compartiment passager.

De nombreux paramètres de ces équipements de service aux passagers sont réglables, par exemple le volume sonore, les messages diffusés, ou encore la valeur de consigne autour de laquelle la température est régulée. Ces réglages sont fréquemment centralisés via un module unique de contrôle qui permet à un utilisateur, notamment au chauffeur du véhicule ou à un superviseur distant de la flotte de véhicules, de modifier ces paramètres via une interface unique.

Cependant, la pertinence du réglage des équipements de service aux passagers peut encore être améliorée. En particulier, le réglage de ces équipements par le chauffeur ajoute une charge de travail supplémentaire, et des réglages fins ne sont donc pas compatibles avec la charge de travail imposée par la conduite. Lorsque le réglage des équipements est effectué à distance par un superviseur du véhicule, ce superviseur est en charge d'un grand nombre de véhicules et ne peut donc pas intervenir fréquemment pour des réglages fins. Dans d'autres cas, par exemple si le véhicule ne comporte pas de chauffeur, le réglage des équipements n'est effectué que lorsque le véhicule est au dépôt, ce qui diminue d'autant plus la pertinence de ces réglages, qui peuvent se trouver inadaptés à de nouvelles circonstances.

DE102017202257A1 divulgue un dispositif d'affichage pour un véhicule automobile, présentant une unité de stockage configurée pour stocker des exigences visuelles d'occupants du véhicule, un dispositif d'identification configuré pour identifier un occupant du véhicule, une unité de traitement configurée pour associer les exigences visuelles à un occupant du véhicule identifié et pour transmettre les exigences visuelles associées à une unité d'affichage, et une unité d'affichage qui peut être ajustée individuellement à des exigences visuelles d'un occupant du véhicule, ainsi qu'un véhicule automobile avec un tel dispositif d'affichage et un procédé pour le réglage individuel d'une unité d'affichage.

Le but de l'invention est de proposer un dispositif de contrôle permettant d'améliorer encore la pertinence du réglage des paramètres des équipements de service aux passagers du véhicule.

A cet effet, il est proposé un dispositif de contrôle destiné à être embarqué dans un véhicule automobile, notamment dans un véhicule automobile autonome, le véhicule automobile comportant un compartiment passager propre à accueillir au moins un passager et au moins un équipement de service au(x) passager(s) du compartiment passager, le dispositif de contrôle étant prévu pour être relié à chaque équipement de service au(x) passager(s) et comportant :
- un module de détection configuré pour détecter au moins un passager du compartiment passager,
- un module de classification configuré pour classifier le passager détecté dans au moins une catégorie de passagers, notamment parmi un ensemble de catégories de passagers prédéterminées, et
- un module de génération configuré pour générer en fonction au moins de ladite catégorie de passager une commande de l'au moins un équipement de service au(x) passager(s),
- le module de détection est configuré pour détecter une pluralité de passagers du compartiment passager, le module de classification étant configuré pour classifier chaque passager détecté dans au moins une catégorie de passagers correspondante, le module de génération étant configuré pour calculer la commande en fonction de chaque catégorie détectée, et
- le module de génération est configuré pour calculer, pour chaque catégorie de passagers, un nombre de passagers catégorisés dans la catégorie, pour déterminer une catégorie de passagers majoritaire à partir des nombres de passagers calculés et pour générer la commande en fonction de la catégorie de passagers majoritaire.

Selon des modes de réalisation particuliers, le dispositif de contrôle comprend une ou plusieurs des caractéristiques suivantes :
- le module de génération est configuré pour ordonner les catégories de passagers associées au(x) passager(s) détectés selon une relation d'ordre et pour générer la commande en fonction de l'ordre des catégories de passagers associées au(x) passager(s) détectés.
- chaque catégorie de passagers est choisie parmi le groupe consistant en :
   - les enfants,
   - les personnes âgées,
   - les personnes parlant un langage prédéterminé,
   - les personnes ayant une morphologie prédéterminée,
   - les personnes à mobilité réduite,
   - les aveugles et malvoyants,
   - les personnes accompagnées de bagages,
   - les personnes ayant une posture prédéterminée,
   - les hommes, et
   - les femmes.
- le module de détection comporte au moins un capteur choisi parmi le groupe consistant en : un capteur d'image(s), un capteur de présence, un capteur sonore, un capteur infrarouge et un capteur de température.
- au moins un capteur est un capteur d'image(s), notamment un capteur d'image(s) stéréoscopique, le module de classification étant configuré pour classifier le passager par détermination d'une taille du passager à partir d'image(s) issue(s) du capteur d'image(s).
- au moins un capteur est un capteur sonore, le module de classification étant configuré pour identifier un langage parlé par au moins un passager, le module de génération étant configuré pour transmettre à l'équipement de service au(x) passager(s) une commande de transmission d'information au passager (49) dans le langage identifié.

Il est également proposé un véhicule automobile, notamment un véhicule automobile autonome, le véhicule automobile comportant un compartiment passager propre à accueillir au moins un passager et au moins un équipement de service au(x) passager(s) accueilli dans le compartiment passager, le véhicule automobile comportant un dispositif de contrôle tel que précédemment décrit, le dispositif de contrôle étant relié à chaque équipement de service au(x) passager(s).

Selon un mode de réalisation particulier, l'équipement de service aux passagers est choisi parmi le groupe consistant en :
- un équipement de régulation de température du compartiment passager,
- un dispositif d'affichage,
- un dispositif acoustique,
- un siège,
- une porte du compartiment passager,
- un dispositif de génération d'odeurs,
- un organe de commande actionnable par un passager,
- une fenêtre du compartiment passager, et
- une prise d'alimentation électrique.

Il est également proposé un procédé de contrôle d'un véhicule automobile (10), notamment d'un véhicule automobile autonome, le véhicule automobile comportant un compartiment passager propre à accueillir au moins un passager , au moins un équipement de service au(x) passager(s) du compartiment passager et un dispositif de contrôle comportant un module électronique de détection, un module électronique de classification et un module électronique de génération, le procédé comprenant les étapes suivantes :
- détection d'au moins un passager du compartiment passager par le module de détection,
- classification du passager détecté dans au moins une catégorie de passagers, notamment parmi un ensemble de catégories de passagers prédéterminées, par le module de classification,
- génération, par le module de génération, d'une commande de l'équipement de service au(x) passager(s), en fonction au moins de la catégorie de passager identifiée et
- transmission de la commande à l'équipement de service au(x) passager(s) par le module de génération.

Il est également proposé un programme d'ordinateur comportant des instructions logicielles qui, lorsqu'elles sont exécutées par un dispositif de contrôle ou un véhicule automobile tels que précédemment décrits, mettent en oeuvre un procédé tel que précédemment décrit.

Des caractéristiques et avantages de l'invention apparaîtront à la lecture de la description qui va suivre, donnée uniquement à titre d'exemple non limitatif, et faite en référence aux dessins annexés, sur lesquels :
- [Fig 1] la figure 1 est une représentation schématique d'un véhicule comportant un dispositif de contrôle selon l'invention,
- [Fig 2] la figure 2 est une représentation schématique du dispositif de contrôle de la figure 1, et
- [Fig 3] la figure 3 est un ordinogramme des étapes d'un procédé de contrôle du véhicule de la figure 1.

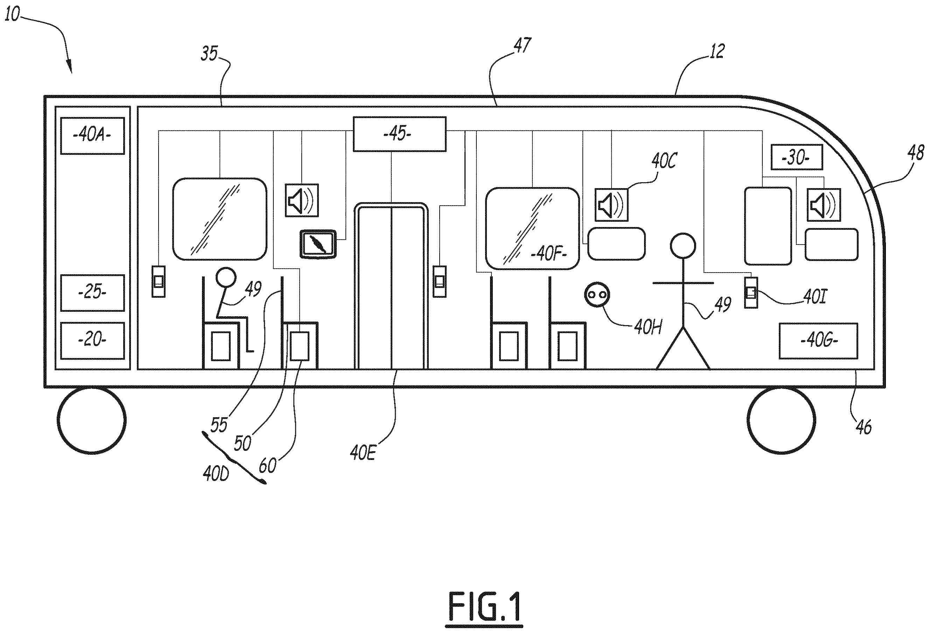

Un véhicule automobile 10 est représenté schématiquement sur la figure 1.

Le véhicule 10 est par exemple un véhicule automobile, en particulier un bus. Toutefois, d'autres types de véhicules automobiles sont susceptibles d'être envisagés, par exemple des véhicules individuels tels qu'une voiture.

Comme visible sur la figure 1, chaque véhicule 10 comprend, de manière connue, une carrosserie 12, des roues, un moteur 20 relié mécaniquement via une chaîne de transmission (non représentée) aux roues pour l'entraînement desdites roues en rotation autour de leur axe, un système de direction (non représenté), adapté pour agir sur les roues du véhicule 10 de manière à modifier l'orientation de sa trajectoire, et un système de freinage (non représenté), adapté pour exercer une force de freinage sur les roues du véhicule 10.

Chaque véhicule automobile 10 est typiquement constitué par un véhicule à traction et/ou propulsion électrique. A cet effet, le moteur 20 est constitué par un moteur électrique, et le véhicule 10 comprend une batterie électrique (non représentée) raccordée électriquement au moteur 20 pour l'alimentation du moteur 20 en électricité.

Chaque véhicule automobile 10 est par exemple un véhicule autonome. A cet effet, le véhicule automobile 10 comprend un dispositif électronique de conduite autonome 25 adapté pour piloter le véhicule de manière autonome en recevant des informations sur l'environnement du véhicule 10 par l'intermédiaire d'au moins un capteur 30, également appelé capteur d'environnement, et en agissant sur le moteur 20, le système de direction et le système de freinage, de manière à modifier la vitesse, l'accélération et la trajectoire du véhicule 10 en réaction aux informations reçues. Chaque capteur d'environnement 30 est par exemple une caméra, un capteur de température, un capteur de pression, un capteur d'humidité ou un lidar.

Chaque véhicule automobile autonome 10 présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*)*,* ou égal à 4, c'est-à-dire une automatisation élevée (de l'anglais *High Automation*)*,* ou encore égal à 5, c'est-à-dire une automatisation complète (de l'anglais *Full Automation*)*.*

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 10. Selon ce niveau 3, un système de gestion de la conduite autonome, embarqué à bord du véhicule automobile autonome 10, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 12, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 10, effectue la conduite dynamique latérale et longitudinale dans toutes les situations rencontrées par le véhicule automobile autonome 10, pendant tout son trajet. Aucun conducteur n'est alors requis.

Comme visible sur la figure 1, le véhicule 10 comprend en outre avantageusement au moins un compartiment passager 35, au moins un compartiment de service 37, au moins un équipement 40A à 40I de service et au moins un dispositif de contrôle 45.

Chaque compartiment passager 35 est délimité par la carrosserie 12. En particulier, chaque compartiment passager 35 est délimité par un sol 46, par un plafond 47 et par des parois latérales 48 ménagés dans la carrosserie 12.

Chaque compartiment passager 35 est propre à accueillir au moins un passager 49, par exemple une pluralité de passagers 49.

Selon l'exemple représenté sur la figure 1, le véhicule 10 comporte un unique compartiment passager 35 qui occupe la majorité de l'espace délimité par la carrosserie 12. En variante, le véhicule 10 comporte une pluralité de compartiments passagers 35 distincts les uns des autres.

Chaque compartiment de service 37 est un compartiment séparé du ou des compartiment(s) passager 35 du véhicule 10. En particulier, chaque compartiment de service 37 est configuré pour empêcher le ou les passagers 49 d'accéder au compartiment de service 37 lorsque le véhicule 10 est en service.

Chaque compartiment de service 37 accueillie au moins un équipement du véhicule 10, par exemple le moteur 20, le système de direction, ou encore le dispositif de conduite autonome 35.

Sur la figure 1, un unique compartiment de service 37 est représenté, ce compartiment de service étant disposé en arrière du compartiment passager 35. Il est à noter que le nombre de compartiments de service 37 ainsi que leur positionnement dans le véhicule 10 sont susceptibles de varier.

Chaque équipement de service 40A à 40I est un équipement de service au(x) passager(s) 49 d'un compartiment passager 35 correspondant. Par exemple, au moins un équipement de service au(x) passager(s) 40A à 40I est un équipement utilisable par au moins un passager 49 du compartiment passager 35. En variante, au moins un équipement de service 40A à 40I est un équipement prévu pour interagir avec un passager 49 du compartiment passager 35.

Selon l'exemple de la figure 1, le véhicule 10 comporte une pluralité d'équipements de service au(x) passager(s) 40A à 40I.

Chaque équipement 40A à 40I de service au(x) passager(s) est, par exemple, choisi parmi le groupe consistant en :
- un équipement de régulation de température 40A,
- un dispositif d'affichage 40B,
- un dispositif acoustique 40C,
- un siège 40D,
- une porte 40E d'un compartiment passager 35,
- une fenêtre 40F d'un compartiment passager 35,
- un dispositif de génération d'odeurs 40G,
- une prise d'alimentation électrique 40H,
- une lampe, et
- un organe de commande 40I.

Il est à noter que d'autres types d'équipements de service aux passagers sont également susceptibles d'être envisagés.

Chaque équipement de régulation de température 40A est configuré pour modifier la température du compartiment passager 35 correspondant. En particulier, chaque équipement de régulation de température 40A est propre à réguler la température autour d'une valeur de consigne.

Selon un mode de réalisation, chaque équipement de régulation de température 40A est propre à réguler la température d'une zone spécifique du compartiment passager 35 autour d'une valeur de consigne.

Chaque équipement de régulation de température 40A est, par exemple, un climatiseur, ou encore un équipement de chauffage.

Chaque équipement de régulation de température 40A comprend, par exemple, au moins un capteur propre à mesurer des valeurs de la température du compartiment passager 35 correspondant et un dispositif de régulation propre à injecter un flux d'air chaud ou d'air froid dans le compartiment passager 35 en fonction des valeurs de température mesurées.

Chaque équipement de régulation de température 40A est, par exemple, accueillie au moins partiellement dans un compartiment de service 37 correspondant

Chaque dispositif d'affichage 40B est configuré pour présenter au moins une information visuelle à destination d'un ou plusieurs passager(s) 49 du compartiment passager 35 correspondant.

Par exemple, chaque dispositif d'affichage 40B comporte un écran propre à afficher des images ou un texte.

Chaque dispositif d'affichage 40B est, par exemple, fixé à une paroi interne du compartiment passager 35 correspondant, par exemple suspendu au plafond 47 ou fixé à une paroi latérale 48 du compartiment passager 35. En variante, au moins un dispositif d'affichage 40B est fixé à un siège 40D, par exemple à l'arrière d'un dossier du siège 40D.

Chaque dispositif acoustique 40C est configuré pour émettre un son à destination d'au moins un passager 49 du compartiment passager 35. Par exemple, chaque dispositif acoustique 40C est configuré pour émettre des informations sonores, par exemple des informations relatives au déplacement du véhicule 10, ou encore de la musique, à destination d'au moins un passager 49 du compartiment passager 35.

Un haut-parleur est un exemple de dispositif acoustique 40C.

Chaque dispositif acoustique 40C est, par exemple, fixé à une paroi interne du compartiment passager 35 correspondant, par exemple suspendu au plafond 47ou fixé à une paroi latérale 48 du compartiment passager 35. En variante, au moins un dispositif acoustique 40C est fixé à un siège 40D, par exemple à l'arrière d'un dossier du siège 40D.

Selon un mode de réalisation au moins un dispositif acoustique 40C est solidaire d'un dispositif d'affichage 40B correspondant. Par exemple, le dispositif acoustique 40C et le dispositif d'affichage 40B font partie d'un dispositif multimédia tel qu'une tablette. En particulier, le dispositif multimédia est configuré pour être contrôlable par un passager 49 du compartiment passager 35 correspondant, notamment pour afficher des informations ou émettre des sons sélectionnés par le passager 49.

Sur la figure 1, six sièges 40D sont représentés. Toutefois, le nombre de sièges 40D est susceptible de varier.

Chaque siège 40D est configuré pour permettre à un passager 35 du compartiment passager 35 correspondant de s'asseoir sur le siège 40D.

Chaque siège 40D comporte au moins une assise 50 propre à supporter le passager 49 et, optionnellement, un dossier 55 prévu pour permettre au passager 49 d'appuyer son dos contre le dossier.

Sur la figure 1, chaque assise 50 est plane et horizontale. Cependant, l'orientation et la forme des assises 50 sont susceptibles de varier d'un mode de réalisation à un autre, de même que la forme et l'orientation du dossier 55.

Chaque siège 40D comprend, en outre, au moins un actionneur 60, notamment un ensemble d'actionneurs 60, configurés pour modifier des paramètres du siège 40D. Sur la figure 1, un unique actionneur 60 est représenté symboliquement.

Par exemple, au moins un actionneur 60 est configuré pour modifier une distance entre le sol 46 et l'assise 50, par exemple pour déplacer l'assise 50 en translation verticalement par rapport au sol 46. Optionnellement, au moins un actionneur 60 est configuré pour faire pivoter le dossier 55 par rapport à l'assise 50, ou encore pour déplacer en translation le dossier 55 par rapport à l'assise 50.

Selon une variante, au moins un siège 40D est un strapontin. Un strapontin est un siège 40D dont l'assise 50 est susceptible de pivoter entre une position basse et une position haute autour d'un axe horizontal. Dans la position basse, l'assise 50 est sensiblement horizontale et propre à supporter un passager 49 assis sur l'assise 50. Dans la position haute, l'assise 50 est sensiblement verticale et empêche un passager de s'asseoir sur l'assise 50. Dans ce cas, l'actionneur 60 est configuré pour déplacer l'assise 50 entre sa position haute et sa position basse, et/ou pour verrouiller l'assise 50 dans l'une de ces deux positions. Lorsque l'assise 50 est verrouillée dans l'une de ses positions haute et basse, l'assise 50 empêche un passager 49 de déplacer l'assise 50 dans l'autre position parmi ses positions haute et basse.

Optionnellement, au moins un siège 40D est un siège chauffant dont l'assise 50 et/ou le dossier 55 comporte des éléments chauffants. Selon une autre variante, le siège 40D comprend des organes mobiles propres à effectuer un massage d'une partie du corps d'un passager 49 assis sur le siège 40D, notamment un massage du dos du passager 49.

Chaque porte 40E est configurée pour permettre à un passager 49 de pénétrer dans le compartiment passager 35 correspondant ou de quitter le compartiment passager 35 correspondant. Par exemple, au moins une porte 40E, notamment chaque porte 40E, est configurée pour permettre le passage de passagers 49 entre le compartiment passager 35 et l'extérieur du véhicule 10. En variante, au moins une porte 40E est configurée pour permettre le passage de passagers 49 entre deux compartiments passager 35 distincts du véhicule 10.

Chaque porte 40E comporte, par exemple, un actionneur non représenté propre à verrouiller la porte 40E, c'est-à-dire à maintenir la porte 40E dans une configuration dans laquelle la porte 40E empêche le passage de passagers 49 à travers la porte 40E. En particulier, l'actionneur est prévu pour maintenir un panneau de la porte 40E dans une position dans laquelle le panneau de porte obture une ouverture de la carrosserie 12.

Chaque fenêtre 40F est configurée pour permettre à un passager 49 d'observer l'extérieur du véhicule 10 depuis le compartiment passager 35 correspondant. Par exemple, chaque fenêtre 40F comporte un panneau transparent au rayonnement visible disposé dans une ouverture de la carrosserie. Le panneau est notamment mobile entre une position d'obturation dans laquelle le panneau obture totalement l'ouverture correspondante et une position ouverte dans laquelle l'ouverture est au moins partiellement dégagée.

Chaque fenêtre 40F est par exemple ménagée dans une paroi latérale 48 de la carrosserie. En variante ou en complément, au moins une fenêtre 40F est un toit ouvrant ménagé dans un toit de la carrosserie 12.

Chaque fenêtre 40F comporte, par exemple, un actionneur non représenté propre à verrouiller la fenêtre 40F, c'est-à-dire à maintenir le panneau de la fenêtre 40F dans la position d'obturation. En particulier, l'actionneur est propre à empêcher un passager 49 de déplacer le panneau de la fenêtre 40F lorsque la fenêtre 40F est verrouillée.

En complément facultatif, la fenêtre comprend, par exemple, un dispositif d'occultation propre à occulter la fenêtre 40F. Le dispositif d'occultation est par exemple un rideau ou un volet mobile, ou encore une vitre du panneau de la fenêtre 40F, dont l'opacité est variable par exemple sous l'influence d'une tension électrique.

Chaque dispositif de génération d'odeurs 40G est configuré pour modifier une odeur du compartiment passager 35, notamment pour injecter un parfum dans le compartiment passager 35.

Le dispositif de génération d'odeurs 40G est, par exemple, un pulvérisateur propre à pulvériser un parfum, ou encore un diffuseur de parfum, exploitant notamment un flux d'air propre à transporter le parfum s'évaporant du diffuseur.

Chaque prise d'alimentation électrique 40H est prévue pour alimenter électriquement un dispositif fixé de manière amovible à la prise d'alimentation électrique 40H. Par exemple, chaque prise d'alimentation électrique 40H est une prise murale portée par une paroi, notamment une paroi latérale 48 de la carrosserie 12.

Chaque organe de commande 40I est un organe actionnable par un passager 49 pour transmettre une instruction à un dispositif du véhicule 10. En particulier, l'organe de commande 40I est configuré pour générer un signal d'instruction à destination d'un autre dispositif du véhicule 10 lorsque l'organe de commande 40I est actionné par un passager 49.

Selon un mode de réalisation, au moins un organe de commande 40I est propre à commander l'exécution d'une action par un autre équipement de service aux passagers. Dans ce cas, le signal d'instruction est transmis à un autre équipement 40A, 40B, 40C, 40D, 40E, 40F, 40G ou 40H de service aux passagers 49 du véhicule 10.

Par exemple, l'organe de commande 40I est propre à commander un actionneur d'un siège 40D, d'une porte 40E ou d'une fenêtre 40F. En variante, l'organe de commande 40I est configuré pour commander l'affichage d'une information spécifique par un dispositif d'affichage 40B ou l'émission d'un son ou d'une information sonore spécifique par un dispositif acoustique 40C. Selon une autre variante, l'organe de commande 40I est configuré pour modifier la température de consigne de l'équipement 40A de régulation de température.

Selon une variante, l'organe de commande 40I est configuré pour émettre à destination du dispositif électronique de conduite autonome 25 un signal d'instruction demandant un arrêt du véhicule 10, notamment un arrêt du véhicule 10 à un emplacement prédéterminé des voies de circulation sur lesquelles le véhicule 10 se déplace.

Il est défini un mode de fonctionnement activé et un mode de fonctionnement désactivé pour chaque organe de commande 40I. Lorsque l'organe de commande 40I est dans le mode activé, l'organe de commande émet un signal d'instruction lorsque l'organe de commande 40I est actionné par un passager. Au contraire, lorsque l'organe de commande 40I est dans le mode désactivé, l'organe de commande 40I n'émet pas de signal d'instruction lorsque l'organe de commande 40I est actionné par un passager.

Le dispositif de contrôle 45 comporte un module de détection 65, un module de classification 70, un module de génération 75 et une unité de traitement d'informations 80.

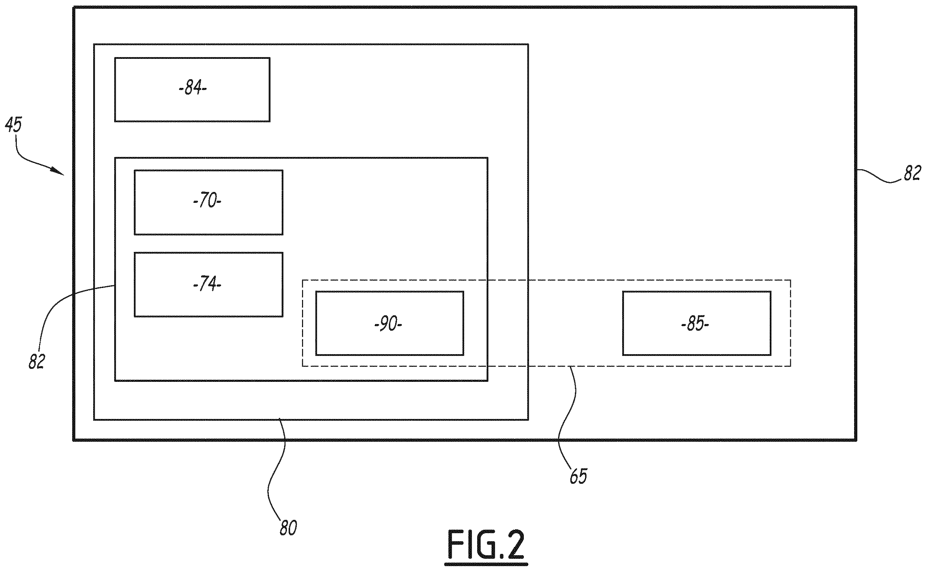

Selon le mode de réalisation représenté sur la figure 2, le dispositif de contrôle 45 comporte en outre un unique boîtier 82 délimitant un volume de réception du module de détection 65, du module de classification 70, du module de génération 75 et de l'unité de traitement d'informations 80. En variante, les modules de détection 65, de classification 70 et de génération 75 sont susceptibles d'être répartis dans deux boîtiers distincts ou plus.

Le dispositif de contrôle 45 est relié à chaque équipement de service au(x) passager(s) 40A à 40I. Par exemple, le dispositif de contrôle 45 est relié à chaque équipement de service au(x) passager(s) 40A à 40I par une liaison filaire propre à transmettre des informations entre le dispositif de contrôle 45 et l'équipement de service au(x) passager(s) 40A à 40I sous forme de signaux électriques. En variante, le dispositif de contrôle 45 est relié à au moins un équipement de service au(x) passager(s) 40A à 40I via une liaison de données radiofréquence dans laquelle les informations sont transmises sous forme d'ondes électromagnétiques présentant une fréquence inférieure ou égale à 300 gigahertz (GHz).

Le module de détection 65 est configuré pour détecter une pluralité de passagers 49 accueillis dans l'un des compartiments passagers 35, notamment chaque passager 49 accueilli dans le compartiment passager 35 considéré.

Le module de détection 65 comporte, par exemple, au moins un capteur 85 et un module de repérage 90.

Chaque capteur 85 est, par exemple, accueilli dans le boîtier 82. Toutefois, des modes de réalisation dans lesquels au moins un capteur 85 est disposé à l'extérieur du boîtier 82 sont également envisagés.

Chaque capteur 85 est configuré pour mesurer des valeurs d'au moins une grandeur et pour transmettre les valeurs mesurées au module de repérage 90.

Chaque capteur 85 est, par exemple, choisi parmi le groupe consistant en : un capteur d'image(s), un capteur de présence, un capteur sonore, un capteur infrarouge et un capteur de température.

Un imageur comportant un ensemble d'éléments de détection ou pixels répartis sous forme d'un réseau régulier est un exemple d'imageur.

En variante, lorsqu'un capteur est un capteur d'image(s), le capteur est un capteur stéréoscopique. Un capteur stéréoscopique est configuré pour générer une représentation en trois dimensions d'une scène à partir de deux images ou plus prises selon des angles différents. Un capteur stéréoscopique comprend par exemple deux imageurs séparés d'une distance connue, la connaissance de cette distance permettant alors au capteur de générer la représentation en trois dimensions à partir des deux images via la connaissance du positionnement relatif des imageurs.

Le module de repérage 90 est configuré pour détecter une pluralité de passagers 49, notamment chaque passager 49 accueilli dans le compartiment passager 35 considéré, à partir des valeurs mesurées par le ou les capteurs 85.

Le module de classification 70 est configuré pour classifier chaque passager 49 détecté dans au moins une catégorie de passagers 49. En particulier, le module de classification 70 est configuré pour classifier chaque passager 49 dans une pluralité de catégories de passagers 49.

Chaque catégorie de passagers 49 est notamment choisie parmi un ensemble de catégories de passagers prédéterminées. Le module de classification 70 est, par exemple, configuré pour classifier chaque passager 49 dans chaque catégorie de passagers 49, parmi l'ensemble de catégories de passagers 49, qui s'applique au passager 49 considéré.

L'ensemble des catégories de passagers 49 prédéterminées comprend, par exemple, le groupe consistant en :
- les enfants,
- les personnes âgées,
- les personnes parlant un langage prédéterminé,
- les personnes ayant une morphologie prédéterminée,
- les personnes à mobilité réduite,
- les aveugles et malvoyants,
- les personnes accompagnées de bagages,
- les personnes ayant une posture prédéterminée,
- les personnes accompagnées d'animaux de compagnie,
- les hommes, et
- les femmes.

Un enfant est associé, entre autres, à une taille inférieure ou égale à un seuil prédéterminé.

Par exemple, le module de classification 70 est configuré pour déterminer une taille du passager 49 à partir d'au moins une image issue du capteur d'image(s) 85, notamment si le capteur d'image(s) 85 est un capteur stéréoscopique 85, et pour classifier le passager 49 en fonction de la taille déterminée. Le module de classification 70 est notamment configuré pour classifier le passager 49 dans la catégorie « enfant » lorsque la taille est inférieure au seuil prédéterminé.

En complément, le module de classification 70 est configuré pour classifier le passager 49 dans la catégorie des enfants en fonction d'au moins une image du visage du passager 49, d'une voix du passager 49, ou encore d'un comportement du passager 49. La classification du passager à partir d'une image du visage comprend par exemple la détection de points spécifiques du visage.

En particulier, le module de détection 70 est configuré pour classifier le passager 49 dans la catégorie des enfants en fonction d'au moins deux critères parmi une taille du passager 49, une image du visage du passager 49, une voix du passager 49 et/ou un comportement du passager 49.

Une personne âgée est identifiée notamment à partir d'une ou plusieurs image(s) du visage, notamment par détection de points spécifiques du visage, ou encore à partir de la détection d'un accessoire tel qu'une canne, ou encore à partir d'un enregistrement de la voix du passager 49.

Le module de classification 70 est configuré pour identifier un langage parlé par au moins un passager 49 à partir de valeurs issues d'un capteur sonore 85, et pour classifier le passager dans la catégorie des personnes parlant ledit langage.

Dans un mode de réalisation avantageux, lorsqu'au moins l'un des capteurs 85 dans le véhicule 10 est un capteur d'image(s), le module de classification 70 est configuré pour classifier le ou les passager(s) 49 par un traitement d'image(s) issue(s) du capteur d'image(s) associé à une méthode d'apprentissage automatique (de l'anglais *machine learning*).

La méthode d'apprentissage automatique se base, par exemple, sur un modèle utilisant une approche statistique afin de permettre d'améliorer les performances de cette méthode à résoudre des tâches sans être explicitement programmé pour chacune de ces tâches. L'apprentissage automatique comporte deux phases. La première phase consiste à définir un modèle à partir de données présentes dans une base de données, appelées observations. L'estimation du modèle consiste en particulier à reconnaître la présence d'un ou plusieurs objets dans une image. Cette phase dite d'apprentissage est généralement réalisée préalablement à l'utilisation pratique du modèle. La seconde phase correspond à l'utilisation du modèle : le modèle étant défini, de nouvelles images peuvent alors être soumises au modèle afin d'obtenir le ou les objets détectés sur lesdites images.

En particulier, la méthode d'apprentissage automatique est propre à détecter des objets associés au passager 49 et caractéristiques d'une catégorie du passager 49, tel, une canne ou un fauteuil roulant associés à une mobilité réduite du passager 49.

Le modèle d'apprentissage automatique comporte par exemple la mise en oeuvre d'un réseau de neurones. Un réseau de neurones est en général composé d'une succession de couches dont chacune prend ses entrées sur les sorties de la précédente. Chaque couche est composée d'une pluralité de neurones, prenant leurs entrées sur les neurones de la couche précédente. À chaque synapse entre neurones est associée un poids synaptique, de sorte que les entrées reçues par un neurone sont multipliées par ce poids, puis additionnées par ledit neurone. Le réseau de neurones est optimisé grâce aux ajustements des différents poids synaptiques pendant la phase d'apprentissage en fonction des images présentes dans la base de données initiale.

Le module de génération 75 est configuré pour générer une commande d'au moins un équipement de service 40A à 40I aux passagers 49 en fonction d'au moins une catégorie de passagers 49 déterminée par le module de classification 70. Le module de génération 75 est, en outre, configuré pour transmettre la commande à l'équipement de service aux passagers 40A à 40I.

Chaque commande est, par exemple, une commande de modification d'un état de l'équipement de service aux passagers 40A à 40I.

La commande est, par exemple, calculée en fonction de chaque catégorie détectée pour l'ensemble des passagers 49 d'un même compartiment passager 35, ou pour l'ensemble des passagers 49 du véhicule 10.

Le module de génération 75 est, en outre, configuré pour ordonner les catégories de passagers associées aux passagers 49 détectés selon une relation d'ordre, et pour générer la commande en fonction de l'ordre des catégories de passager. Par exemple, l'ensemble de catégories de passagers prédéterminées est un ensemble ordonné, dans lequel il est défini une relation d'ordre entre les différentes catégories de passagers. En particulier, la relation d'ordre est propre à déterminer, pour chaque groupe de catégories de passagers choisies parmi l'ensemble de catégories de passagers prédéterminées, une catégorie de passagers prioritaire par rapport aux autres catégories du groupe.

La relation d'ordre est, par exemple, prédéterminée, auquel cas les catégories de passagers sont toujours ordonnées dans le même ordre.

Le module de génération 75 est par exemple configuré pour, lorsque plusieurs passagers 49 appartenant à des catégories de passagers différentes sont présents dans un même compartiment passager, générer la commande en fonction de la catégorie prioritaire parmi les catégories de passagers représentées par les passagers 49.

Le module de génération 75 est, en outre, configuré pour calculer, pour chaque catégorie de passagers associée à au moins un passager 49 par le module de classification 70, un nombre de passagers 49 classifiés dans ladite catégorie. Le module de génération 75 est, en outre, configuré pour déterminer une catégorie de passagers majoritaire parmi les catégories de passagers associées chacune à au moins un passager 49, et pour générer la commande en fonction de la catégorie de passagers majoritaire. La catégorie majoritaire est la catégorie de passagers pour laquelle le nombre de passagers est le plus élevé. La relation d'ordre entre les catégories de passagers est susceptible de varier en fonction des passagers 49 présents dans le véhicule 10.

Chaque équipement de service au(x) passager(s) de service au(x) passager(s) 40A à 40I est associé à un sous-ensemble de catégories parmi les catégories de passagers prédéterminées, le sous-ensemble regroupant les catégories de passagers associées à des commandes susceptibles d'être émises à destination dudit équipement de service au(x) passager(s) 40A à 40I. La commande est générée en fonction de la catégorie majoritaire parmi les catégories du sous-ensemble qui sont représentées parmi le ou les passager(s) 49 détectés.

En variante ou en complément, la commande est calculée en fonction de chaque catégorie détectée pour un sous-ensemble de passagers 49 parmi l'ensemble des passagers 49 détectés. Par exemple, le module de génération 75 est configuré pour déterminer une distance entre chaque passager 49 et l'équipement de service aux passagers 40A à 40I, et pour générer la commande audit équipement de service aux passagers 40A à 40I en fonction de la distance déterminée. Par exemple, le module de génération 75 est configuré pour générer la commande en fonction de la ou des catégorie(s) associée(s) à chaque passager 49 pour lequel la distance est inférieure ou égale à une distance prédéterminée.

L'unité de traitement d'informations 80 est formée par exemple d'une mémoire 82 et d'un processeur 84 associé à la mémoire 82.

Dans l'exemple de la figure 2, le module de repérage 90, le module de classification 70 et le module de génération 75 sont réalisés chacun sous forme d'un logiciel, ou d'une brique logicielle, exécutables par le processeur 84. La mémoire 82 est alors apte à stocker un logiciel d'identification, un logiciel de détection, un logiciel de génération, un logiciel d'acquisition, un logiciel de localisation et un logiciel de comptage. Le processeur 64 est alors apte à exécuter chacun des logiciels.

En variante non représentée, le module de repérage 90, le module de classification 70 et le module de génération 75 sont réalisés chacun sous forme d'un composant logique programmable, tel qu'un FPGA (de l'anglais *Field Programmable Gate Array*)*,* ou encore sous forme d'un circuit intégré dédié, tel qu'un ASIC (de l'anglais *Application Specific Integrated Circuit).*

Lorsque le dispositif contrôle 45 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

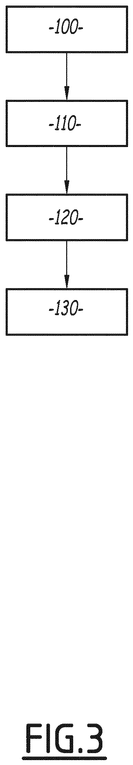

Le fonctionnement du dispositif de contrôle 45 va maintenant être décrit à l'aide de la figure 3 représentant un ordinogramme des étapes d'un procédé selon l'invention de contrôle du véhicule automobile 10, le procédé étant mis en oeuvre par le dispositif électronique de contrôle 45.

Le procédé comprend une étape 100 de détection, une étape 110 de classification, une étape 120 de génération et une étape 130 de transmission.

Lors de l'étape de détection 100, au moins un passager 49, notamment chaque passager 49, présent dans un compartiment passager 35 du véhicule 10 est détecté par le module de repérage 85 à partir des valeurs mesurées par le ou les capteurs 90. Avantageusement, le module de repérage 85 détecte le ou les passager(s) 49 à partir de valeurs mesurées par au moins deux capteurs 90 distincts.

Lors de l'étape 110 de classification, le module de classification 70 classifie chaque passager 49 détecté dans une ou plusieurs catégories de passagers. Par exemple, le module de classification 70 classifie le ou les passagers en fonction de valeurs mesurées par au moins deux capteurs 85 distincts.

Par exemple, un passager 49 est classifié dans la catégorie des enfants en fonction d'au moins une image du visage du passager 49 et/ou d'une taille du passager 49 déterminée à partir d'image(s) fournie(s) par un capteur d'image 85 et/ou à partir d'une voix du passager 90 identifiée par un capteur sonore 85.

Un passager 49 est, par exemple, identifié dans la catégorie des personnes âgées à partir d'images du visage du passager 49. En outre, un passager 49 est classifié dans la catégorie des personnes parlant un langage prédéterminé en fonction de valeurs mesurées par un capteur sonore 85.

L'étape de classification 110 est suivie de l'étape de génération 120. Au cours de cette étape de génération 120, le module de génération 75 génère au moins une commande destinée à au moins un des équipements de service au(x) passager(s) 40A à 40I.

La commande est générée en fonction d'au moins une catégorie dans laquelle au moins un passager 49 d'intérêt est classifié. Il est entendu par « passager d'intérêt » 49 un passager pris en compte par le module de génération 75 pour la génération de la commande.

Selon un mode de réalisation, la commande est générée en fonction de chaque catégorie associée à au moins un passager 49 détecté, auquel cas chaque passager 49 détecté est un passager d'intérêt.

En variante, la commande est générée en fonction de chaque catégorie associée à au moins un passager 49 d'un sous-ensemble de l'ensemble des passagers 49 détectés. Dans ce cas, chaque passager 49 du sous-ensemble est un passager d'intérêt, tandis que chaque passage 49 qui n'appartient pas au sous-ensemble n'est pas un passager d'intérêt.

Les passagers d'intérêt 49 sont par exemple le ou les passager(s) 49 détecté dans une zone prédéterminée du compartiment passager 35 ou de l'un des compartiments passagers 35. La zone prédéterminée est, notamment, une zone comprenant chaque passager 49 situé à une distance inférieure ou égale à un seuil de distance prédéterminé de l'équipement de service au(x) passager(s) 40A à 40I auquel la commande est destinée.

La commande est, par exemple, générée en fonction d'une catégorie de passagers identifiée comme prioritaire parmi l'ensemble des catégories de passagers 49 associées par le module de classification 70 au(x) passagers(s) 49 d'intérêt.

La commande est générée en fonction d'une catégorie de passagers identifiée comme majoritaire parmi les catégorie(s) de passagers associées au(x) passager(s) 49 d'intérêt.

Lorsque l'équipement de service au(x) passagers est un équipement de régulation de température 40A, la commande est, par exemple, une commande fixant une valeur de température de consigne de l'équipement de régulation de température 40A. En variante, la commande est une commande de désactivation de l'équipement de régulation de température 40A.

Par exemple, lorsque le dispositif de génération 75 détermine qu'une majorité de passagers dans le compartiment passager 35 (respectivement dans une zone spécifique du compartiment passager 35), sont des femmes, le dispositif de génération 75 génère une commande fixant la valeur de température de consigne à une première valeur. Si au contraire le dispositif de génération 75 détermine qu'une majorité de passagers dans le compartiment passager 35 (respectivement dans une zone spécifique du compartiment passager 35), sont des femmes, le dispositif de génération 75 génère une commande fixant la valeur de température de consigne à une deuxième valeur.

La première valeur est strictement supérieure à la deuxième valeur. La première valeur est, par exemple, comprise entre 23 degrés Celsius (°C) et 27 °C, notamment égale à 25°C. La deuxième valeur est, par exemple, comprise entre 19°C et 23°C.

Lorsque l'équipement de service au(x) passager(s) est un dispositif d'affichage 40B, la commande est, par exemple, une commande de modification d'un langage dans laquelle les informations sont affichées sur le dispositif d'affichage 40B. En particulier, la commande est une commande commandant l'affichage des informations dans un ou plusieurs langages pour lesquels il a été déterminé qu'un passager d'intérêt 49 le parle.

En variante ou en complément, la commande est une commande de modification d'une taille des caractères affichés sur le dispositif d'affichage, notamment d'une augmentation de la taille s'il a été déterminé qu'au moins un passager d'intérêt 49 est une personne âgée.

Une commande d'affichage d'informations adaptées à un enfant, par exemple par adaptation du vocabulaire utilisé, est un autre exemple de commande générée lorsqu'au moins un passager d'intérêt 49 est un enfant.

Lorsque l'équipement de service au(x) passager(s) est un dispositif acoustique 40C, la commande est, par exemple, une commande de modification d'un langage dans laquelle les informations sont émises par le dispositif acoustique 40C. En particulier, la commande est une commande commandant l'émission des informations dans un ou plusieurs langages pour lesquels il a été déterminé qu'un passager d'intérêt 49 parle ce langage.

Une commande d'émission d'informations adaptées à un enfant, par exemple par adaptation du vocabulaire utilisé, est un autre exemple de commande générée lorsqu'au moins un passager d'intérêt 49 est un enfant.

En variante ou en complément, la commande est une commande d'émission d'informations complémentaires, notamment d'informations plus détaillées que les informations émises en l'absence de commande, lorsqu'au moins un passager d'intérêt 49 est classifié dans la catégorie des aveugles ou des personnes malvoyantes.

Selon un autre exemple, un niveau sonore des informations émises est modifié par la commande, notamment diminué lorsqu'au moins un passager d'intérêt 49 est un enfant.

En variante ou en complément, la commande est une commande de modification de la voix émettant les informations, par exemple de modification d'un timbre ou d'une hauteur de la voix. Une voix féminine est par exemple privilégiée lorsqu'au moins un passager d'intérêt 49 est un enfant ou une femme.

Selon une autre variante, la commande est une variation d'une musique émise par l'équipement 40C.

Lorsque l'équipement de service au(x) passager(s) est un siège, la commande est, par exemple, une commande de verrouillage ou de déverrouillage de l'assise 50.

Par exemple, lorsqu'un passager d'intérêt 49 est une personne à mobilité réduite, la commande est une commande prévue pour entraîner un déplacement et/ou un verrouillage de l'assise 50 dans la position haute pour laisser une place à un fauteuil roulant. En variante ou en complément, lorsqu'un passager d'intérêt 49 est une personne âgée, la commande est prévue pour entraîner un déplacement de l'assise 50 vers la position basse par un actionneur 60 du siège 40D.

Selon une autre variante, la commande est une commande d'une modification d'un déplacement de l'assise 50 et/ou du dossier 55 lorsqu'au moins un passager d'intérêt 49 est un enfant. Optionnellement, la commande entraîne, en outre, la désactivation du chauffage et/ou des organes mobiles du siège 40D.

Lorsque l'équipement de service au(x) passager(s) est une porte 40E, la commande est, par exemple, une commande de verrouillage de la porte 40E. Une commande de verrouillage de la porte 40E est par exemple associée à la présence d'un enfant parmi les passagers d'intérêt 49.

Lorsque l'équipement de service au(x) passager(s) est une fenêtre 40F, la commande est, par exemple, une commande d'ouverture ou de fermeture de la fenêtre 40F, ou de verrouillage de la fenêtre 40F dans sa position d'obturation. En particulier, une commande de fermeture de la fenêtre 40F ou de verrouillage de la fenêtre 40F dans sa position d'obturation est associée à la présence d'un enfant parmi le ou les passager(s) d'intérêt 49.

En variante, la commande est une commande d'occultation de la fenêtre 40F, lorsqu'au moins un passager(s) d'intérêt 49 est un enfant.

Lorsque l'équipement de service au(x) voyageur(s) est une prise électrique 40H, la commande est, par exemple, une commande d'activation ou de désactivation de la prise électrique 40H.

La prise électrique 40H est, par exemple, désactivée si une majorité de passager(s) 49 du véhicule 10 est classifiée dans la catégorie des enfants.

Lorsque l'équipement de service au(x) voyageur(s) est une lampe, la commande est par exemple une commande de modification de la teinte de la lumière émise par la lampe, ou encore une commande de modification de la puissance lumineuse émise par la lampe.

Par exemple, lorsqu'un passager d'intérêt 49 est un enfant, la puissance lumineuse est diminuée.

Optionnellement, la puissance lumineuse est fixée, la nuit, à une valeur strictement inférieure à la valeur de puissance lumineuse pendant la journée.

Lorsque l'équipement de service au(x) voyageur(s) est un organe de commande 40I, la commande est une commande de commutation de l'organe de commande 40I depuis son mode de fonctionnement activé vers son mode de fonctionnement désactivé, ou vice-versa.

Par exemple, lorsqu'un passager d'intérêt 49 est un enfant, la commande est destinée à entraîner le basculement de l'organe de commande 40I dans son mode de fonctionnement désactivé.

Au cours de l'étape 130 de transmission, la commande est transmise par le module de génération 75 à au moins un équipement de service au(x) passagers 40A à 40I, et mise en œuvre par chaque équipement de service au(x) passager(s) l'ayant reçue.

Grâce à l'invention, la pertinence du réglage des paramètres des équipements de service aux passagers du véhicule sont améliorées, puisque ces paramètres sont rapidement ajustés aux catégories de passagers 49 représentées dans le véhicule 35, de manière plus fine que ne pourrait le faire un conducteur du véhicule 10.

En outre, lorsque des catégories de plusieurs passagers 49 sont prises en compte dans la génération de la commande, la pertinence des réglages est, encore, améliorée.

La génération des commandes en fonction d'une catégorie majoritaire de passagers permet notamment de prendre en compte de manière simple la pluralité de catégories représentées parmi les passagers 49 détectés.

La génération des commandes en fonction d'une relation d'ordre des catégories permet d'améliorer la pertinence des commandes transmises, puisqu'il est possible de prioriser les commandes en fonction notamment de l'importance que l'action résultant de la commande pour chaque catégorie. Notamment, les actions portant sur la sécurité peuvent être priorisées par rapport aux actions visant à améliorer le confort des passagers 49.

Les capteurs d'images, notamment stéréoscopiques, sont particulièrement adaptés à la détection de passagers 49 et à l'identification des catégories associées. La taille des passagers est un critère permettant de classifier aisément des passagers dans des catégories pertinentes, notamment les enfants.

L'utilisation d'un capteur sonore pour identifier un langage parlé par le passager 49 et la commande d'une transmission d'information à ce passager dans le langage identifié sont particulièrement intéressantes pour améliorer le confort des passagers. En particulier, un plus grand nombre de langages peuvent ainsi être identifiés que si un opérateur était chargé de régler l'équipement de service au(x) passager(s) 40B, 40C correspondant.

## Revendications

1. Dispositif de contrôle (45) destiné à être embarqué dans un véhicule automobile (10), notamment dans un véhicule automobile (10) autonome, le véhicule automobile (10) comportant un compartiment passager (35) propre à accueillir au moins un passager (49) et au moins un équipement (40A, 40B, 40C, 40D, 40E, 40F, 40G, 40H, 40I) de service au(x) passager(s) (49) du compartiment passager (35), le dispositif de contrôle (45) étant prévu pour être relié à chaque équipement de service au(x) passager(s) (40A, 40B, 40C, 40D, 40E, 40F, 40G, 40H, 40I) et comportant :
- un module de détection (65) configuré pour détecter une pluralité de passagers (49) du compartiment passager (35),
- un module de classification (70) configuré pour classifier chaque passager (49) détecté dans au moins une catégorie de passagers correspondante, notamment parmi un ensemble de catégories de passagers prédéterminées, et
- un module de génération (75) configuré pour générer en fonction au moins de ladite catégorie de passager une commande de l'au moins un équipement de service au(x) passager(s) (40A, 40B, 40C, 40D, 40E, 40F, 40G, 40H, 40I),
le module de génération (75) étant configuré pour calculer, pour chaque catégorie de passagers, un nombre de passagers (49) catégorisés dans la catégorie, pour déterminer une catégorie de passagers majoritaire à partir des nombres de passagers (49) calculés et pour générer la commande en fonction de la catégorie de passagers majoritaire.

2. Dispositif de contrôle selon la revendication précédente, dans lequel le module de génération (75) est configuré pour ordonner les catégories de passagers associées au(x) passager(s) (49) détectés selon une relation d'ordre et pour générer la commande en fonction de l'ordre des catégories de passagers associées au(x) passager(s) (49) détectés.

3. Dispositif de contrôle selon l'une quelconque des revendications précédentes dans lequel chaque catégorie de passagers est choisie parmi le groupe consistant en :
- les enfants,
- les personnes âgées,
- les personnes parlant un langage prédéterminé,
- les personnes ayant une morphologie prédéterminée,
- les personnes à mobilité réduite,
- les aveugles et malvoyants,
- les personnes accompagnées de bagages,
- les personnes ayant une posture prédéterminée,
- les hommes, et
- les femmes.

4. Dispositif de contrôle selon l'une quelconque des revendications précédentes, dans lequel le module de détection (65) comporte au moins un capteur (85) choisi parmi le groupe consistant en : un capteur d'image(s), un capteur de présence, un capteur sonore, un capteur infrarouge et un capteur de température.

5. Dispositif de contrôle selon la revendication précédente, dans lequel au moins un capteur (85) est un capteur d'image(s), notamment un capteur d'image(s) stéréoscopique, le module de classification (70) étant configuré pour classifier le passager (49) par détermination d'une taille du passager (49) à partir d'image(s) issue(s) du capteur d'image(s).

6. Dispositif de contrôle selon la revendication 4 ou 5, dans lequel au moins un capteur (85) est un capteur sonore, le module de classification (70) étant configuré pour identifier un langage parlé par au moins un passager, le module de génération (75) étant configuré pour transmettre à l'équipement de service au(x) passager(s) (40A, 40B, 40C, 40D, 40E, 40F, 40G, 40H, 40I) une commande de transmission d'information au passager (49) dans le langage identifié.

7. Véhicule automobile (10), notamment véhicule automobile autonome, le véhicule automobile (10) comportant un compartiment passager (35) propre à accueillir au moins un passager (49) et au moins un équipement (40A, 40B, 40C, 40D, 40E, 40F, 40G, 40H, 40I) de service au(x) passager(s) accueilli dans le compartiment passager (35), le véhicule automobile (10) comportant un dispositif de contrôle (45) selon l'une quelconque des revendications précédentes, le dispositif de contrôle (45) étant relié à chaque équipement de service au(x) passager(s) (40A, 40B, 40C, 40D, 40E, 40F, 40G, 40H, 40I).

8. Véhicule automobile selon la revendication précédente, dans lequel l'équipement de service aux passagers (40A, 40B, 40C, 40D, 40E, 40F, 40G, 40H, 40I) est choisi parmi le groupe consistant en :
- un équipement (40A) de régulation de température du compartiment passager,
- un dispositif d'affichage (40B),
- un dispositif acoustique (40C),
- un siège (40D),
- une porte (40E) du compartiment passager,
- un dispositif (40G) de génération d'odeurs,
- un organe de commande (40I) actionnable par un passager,
- une fenêtre (40F) du compartiment passager, et
- une prise d'alimentation électrique (40H).

9. Procédé de contrôle d'un véhicule automobile (10), notamment d'un véhicule automobile (10) autonome, le véhicule automobile (10) comportant un compartiment passager (35) propre à accueillir au moins un passager (49) , au moins un équipement (40A, 40B, 40C, 40D, 40E, 40F, 40G, 40H, 40I) de service au(x) passager(s) (49) du compartiment passager (35) et un dispositif de contrôle (45) comportant un module électronique de détection (65), un module électronique de classification (70) et un module électronique de génération (75), le procédé comprenant les étapes suivantes :
- détection (100) d'une pluralité de passagers (49) du compartiment passager (35) par le module de détection (65),
- classification (110) de chaque passager (49) détecté dans au moins une catégorie de passagers correspondante, notamment parmi un ensemble de catégories de passagers prédéterminées, par le module de classification (70),
- génération (120), par le module de génération (75), d'une commande de l'équipement (40A, 40B, 40C, 40D, 40E, 40F, 40G, 40H, 40I) de service au(x) passager(s), en fonction au moins de la catégorie de passager identifiée et
- transmission (130) de la commande à l'équipement (40A, 40B, 40C, 40D, 40E, 40F, 40G, 40H, 40I) de service au(x) passager(s) par le module de génération (75), l'étape de génération (120) comportant le calcul, par le module de génération (75), pour chaque catégorie de passagers, d'un nombre de passagers (49) catégorisés dans la catégorie, la détermination, par le module de génération (75), d'une catégorie de passagers majoritaire à partir des nombres de passagers (49) calculés et la génération de la commande en fonction de la catégorie de passagers majoritaire

10. Programme d'ordinateur comportant des instructions logicielles qui, lorsqu'elles sont exécutées par un dispositif de contrôle selon l'une quelconque des revendications 1-6 ou un véhicule automobile selon la revendication 7 ou 8, mettent en œuvre un procédé selon la revendication précédente.

## Patentansprüche

1. Steuervorrichtung (45), die dazu bestimmt ist, in einem Kraftfahrzeug (10), insbesondere in einem autonomen Kraftfahrzeug (10), mitgeführt zu werden, das Kraftfahrzeug (10) umfassend einen Fahrgastraum (35), der geeignet ist, um mindestens einen Fahrgast (49) und mindestens eine Serviceeinrichtung (40A, 40B, 40C, 40D, 40E, 40F, 40G, 40H, 40I) für Fahrgäste (49) des Fahrgastraums (35) aufzunehmen, wobei das Steuervorrichtung (45) dazu vorgesehen ist, mit jeder Fahrgast-Serviceeinrichtung (40A, 40B, 40C, 40D, 40E, 40F, 40G, 40H, 40I) verbunden zu werden, und umfassend:
- ein Erfassungsmodul (65), das konfiguriert ist, um eine Vielzahl von Fahrgasten (49) des Fahrgastraums (35) zu erfassen,
- ein Klassifizierungsmodul (70), das konfiguriert ist, um jeden erfassten Fahrgast (49) in mindestens eine entsprechende Fahrgastkategorie, insbesondere aus einem Satz vorbestimmter Fahrgastkategorien, zu klassifizieren, und
- ein Erzeugungsmodul (75), das konfiguriert ist, um abhängig von mindestens der Fahrgastkategorie einen Befehl der mindestens einen Fahrgast-Serviceeinrichtung (40A, 40B, 40C, 40D, 40E, 40F, 40G, 40H, 40I) zu erzeugen, wobei das Erzeugungsmodul (75) konfiguriert ist, um für jede Fahrgastkategorie eine Anzahl von Fahrgasten (49), die in der Kategorie kategorisiert sind, zu berechnen, um eine Mehrheitsfahrgastkategorie aus den berechneten Anzahlen von Fahrgasten (49) zu bestimmen, und um den Befehl abhängig von der Mehrheitsfahrgastkategorie zu erzeugen.

2. Steuervorrichtung nach dem vorherigen Anspruch, wobei das Erzeugungsmodul (75) konfiguriert ist, um die Fahrgastkategorien, die mit dem/den erfassten Fahrgast/Fahrgästen (49) assoziiert sind, gemäß einer Ordnungsbeziehung zu ordnen, und um den Befehl abhängig von der Ordnung der Fahrgastkategorien, die mit dem/den erfassten Fahrgast/Fahrgästen (49) assoziiert sind, zu erzeugen.

3. Steuervorrichtung nach einem der vorherigen Ansprüche, wobei jede Fahrgastkategorie ausgewählt ist aus der Gruppe, bestehend aus:
- Kindern,
- älteren Personen,
- Personen, die eine vorbestimmte Sprache sprechen,
- Personen, die eine vorbestimmte Morphologie aufweisen,
- Personen mit eingeschränkter Mobilität,
- Blinden und Sehbehinderten,
- Personen mit Gepäck,
- Personen mit einer vorbestimmten Körperhaltung,
- Männern und
- Frauen.

4. Steuervorrichtung nach einem der vorherigen Ansprüche, wobei das Erfassungsmodul (65) mindestens einen Sensor (85) umfasst, ausgewählt aus der Gruppe, bestehend aus: einem Bildsensor(en), einem Anwesenheitssensor, einem Schallsensor, einem Infrarotsensor und einem Temperatursensor.

5. Steuervorrichtung nach dem vorherigen Anspruch, wobei der mindestens ein Sensor (85) ein Bildsensor(en) ist, insbesondere ein stereoskopischer Bildsensor(en), wobei das Klassifizierungsmodul (70) konfiguriert ist, um den Fahrgast (49) durch Bestimmen einer Größe des Fahrgasts (49) anhand von Bild(ern) aus dem Bildsensor zu klassifizieren.

6. Steuervorrichtung nach Anspruch 4 oder 5, wobei mindestens ein Sensor (85) ein Schallsensor ist, wobei das Klassifizierungsmodul (70) konfiguriert ist, um eine Sprache zu identifizieren, die von mindestens einem Fahrgast gesprochen wird, wobei das Erzeugungsmodul (75) konfiguriert ist, um an die Fahrgast-Serviceeinrichtung (40A, 40B, 40C, 40D, 40E, 40F, 40G, 40H, 40I) einen Befehl zum Übertragen von Informationen an den Fahrgast (49) in der identifizierten Sprache zu übertragen.

7. Kraftfahrzeug (10), insbesondere autonomes Kraftfahrzeug, das Kraftfahrzeug (10) umfassend einen Fahrgastraum (35), der geeignet ist, um mindestens einen Fahrgast (49) und mindestens eine Serviceeinrichtung (40A, 40B, 40C, 40D, 40E, 40F, 40G, 40H, 40I) für Fahrgäste, die in dem Fahrgastraum (35) aufgenommen ist, aufzunehmen, das Kraftfahrzeug (10) umfassend eine Steuervorrichtung (45) nach einem der vorherigen Ansprüche, wobei die Steuervorrichtung (45) mit jeder Fahrgast-Serviceeinrichtung (40A, 40B, 40C, 40D, 40E, 40F, 40G, 40H, 40I) verbunden ist.

8. Kraftfahrzeug nach dem vorherigen Anspruch, wobei die Fahrgast-Serviceeinrichtung (40A, 40B, 40C, 40D, 40E, 40F, 40G, 40H, 40I) ausgewählt ist aus der Gruppe, bestehend aus:
- eine Einrichtung (40A) zur Regelung der Temperatur in dem Fahrgastraum,
- eine Anzeigevorrichtung (40B),
- eine akustische Vorrichtung (40C),
- einen Sitz (40D),
- eine Tür (40E) des Fahrgastraums,
- eine Vorrichtung (40G) zum Erzeugen von Gerüchen,
- ein Bedienelement (40I), das von einem Fahrgast betätigt werden kann,
- ein Fenster (40F) des Fahrgastraums und
- eine Steckdose (40H).

9. Verfahren zum Steuern eines Kraftfahrzeugs (10), insbesondere eines autonomen Kraftfahrzeugs (10), das Kraftfahrzeug (10) umfassend einen Fahrgastraum (35), der geeignet ist, um mindestens einen Fahrgast (49) aufzunehmen, mindestens eine Serviceeinrichtung (40A, 40B, 40C, 40D, 40E, 40F, 40G, 40H, 40I) für Fahrgäste (49) des Fahrgastraums (35) und eine Steuervorrichtung (45), umfassend ein elektronisches Erfassungsmodul (65), ein elektronisches Klassifizierungsmodul (70) und ein elektronisches Erzeugungsmodul (75), das Verfahren umfassend die folgenden Schritte:
- Erfassen (100) einer Vielzahl von Fahrgästen (49) des Fahrgastraums (35) durch das Erfassungsmodul (65),
- Klassifizieren (110) jedes Fahrgasts (49), der in mindestens einer entsprechenden Fahrgastkategorie, insbesondere aus einem Satz von vorbestimmten Fahrgastkategorien, durch das Klassifizierungsmodul (70) erfasst wird,
- Erzeugen (120), durch das Erzeugungsmodul (75), eines Befehls der Serviceeinrichtung (40A, 40B, 40C, 40D, 40E, 40F, 40G, 40H, 40I) für Fahrgäste abhängig von mindestens der identifizierten Fahrgastkategorie, und
- Übertragen (130) des Befehls an die Serviceeinrichtung (40A, 40B, 40C, 40D, 40E, 40F, 40G, 40H, 40I) für Fahrgäste durch das Erzeugungsmodul (75), der Schritt eines Erzeugens (120) umfassend ein Berechnen, durch das Erzeugungsmodul (75), für jede Fahrgastkategorie, einer Anzahl von Fahrgästen (49), die in der Kategorie kategorisiert sind, ein Bestimmen, durch das Erzeugungsmodul (75), einer Mehrheitsfahrgastkategorie aus der berechneten Anzahl von Fahrgästen (49) und ein Erzeugen des Befehls abhängig von der Mehrheitsfahrgastkategorie.

10. Computerprogramm, umfassend Software-Anweisungen, die, wenn sie von einer Steuervorrichtung nach einem der Ansprüche 1-6 oder einem Kraftfahrzeug nach Anspruch 7 oder 8 ausgeführt werden, ein Verfahren nach dem vorherigen Anspruch durchführen.

## Claims

1. A control device (45) intended to be embedded in a motor vehicle (10), in particular in an autonomous motor vehicle (10), the motor vehicle (10) including a passenger compartment (35) able to receive at least one passenger (49) and at least one service equipment item (40A, 40B, 40C, 40D, 40E, 40F, 40G, 40H, 40I) for passengers (49) of the passenger compartment (35), the control device (45) being provided to be coupled to each passenger service equipment item (40A, 40B, 40C, 40D, 40E, 40F, 40G, 40H, 40I) and including:
- a detection module (65) configured to detect a plurality of passengers (49) of the passenger compartment (35),
- a classification module (70) configured to classify each detected passenger (49) in at least one corresponding passenger category, in particular among a set of predetermined passenger categories, and
- a generating module (75) configured to generate, as a function at least of said passenger category, a command of the at least one passenger service equipment item (40A, 40B, 40C, 40D, 40E, 40F, 40G, 40H, 40I),
the generating module (75) being configured to compute, for each passenger category, a number of passengers (49) categorized in the category, to determine a majority passenger category from the computed numbers of passengers (49) and to generate the command as a function of the majority passenger category.

2. The control device according to the preceding claim, wherein the generating module (75) is configured to sequence the passenger categories associated with the detected passenger(s) (49) according to an order relationship and to generate the command as a function of the order of the passenger categories associated with the detected passenger(s) (49).

3. The control device according to any one of the preceding claims, wherein each passenger category is chosen from the group consisting of:
- children,
- the elderly,
- persons speaking a predetermined language,
- persons having a predetermined morphology,
- persons with reduced mobility,
- the blind and persons with low vision,
- persons accompanied by luggage,
- persons having a predetermined posture,
- men, and
- women.

4. The control device according to any one of the preceding claims, wherein the detection module (65) includes at least one sensor (85) chosen from the group consisting of: an image sensor, a presence sensor, a sound sensor, an infrared sensor and a temperature sensor.

5. The control device according to the preceding claim, wherein at least one sensor (85) is an image sensor, in particular a stereoscopic image sensor, the classification module (70) being configured to classify the passenger (49) by determining a height of the passenger (49) from image(s) coming from the image sensor.

6. The control device according to claim 4 or 5, wherein at least one sensor (85) is a sound sensor, the classification module (70) being configured to identify a language spoken by at least one passenger, the generating module (75) being configured to send the passenger service equipment item (40A, 40B, 40C, 40D, 40E, 40F, 40G, 40H, 40I) a command to transmit information to the passenger (49) in the identified language.

7. A motor vehicle (10), in particular an autonomous motor vehicle, the motor vehicle (10) including a passenger compartment (35) able to receive at least one passenger (49) and at least one service equipment item (40A, 40B, 40C, 40D, 40E, 40F, 40G, 40H, 40I) for the passenger(s) received in the passenger compartment (35), the motor vehicle (10) including a control device (45) according to any one of the preceding claims, the control device (45) being coupled to each passenger service equipment item (40A, 40B, 40C, 40D, 40E, 40F, 40G, 40H, 40I).

8. The motor vehicle according to the preceding claim, wherein the passenger service equipment item (40A, 40B, 40C, 40D, 40E, 40F, 40G, 40H, 40I) is chosen from the group consisting of:
- an equipment item (40A) for regulating the temperature of the passenger compartment,
- a display device (40B),
- an acoustic device (40C),
- a seat (40D),
- a door (40E) of the passenger compartment,
- a smell generating device (40G),
- a control member (401) able to be actuated by a passenger,
- a window (40F) of the passenger compartment, and
- a power outlet (40H).

9. A control method of a motor vehicle (10), in particular of an autonomous motor vehicle (10), the motor vehicle (10) including a passenger compartment (35) able to receive at least one passenger (49), at least one service equipment item (40A, 40B, 40C, 40D, 40E, 40F, 40G, 40H, 40I) for the passenger(s) (49) of the passenger compartment (35) and a control device (45) including an electronic detection module (65), an electronic classification module (70) and an electronic generating module (75), the method comprising the following steps:
- detecting (100) a plurality of passengers (49) of the passenger compartment (35) via the detection module (65),
- classifying (110) each detected passenger (49) in at least one corresponding passenger category, in particular among a set of predetermined passenger categories, via the classification module (70),
- generating (120), via the generating module (75), a command of the passenger service equipment item (40A, 40B, 40C, 40D, 40E, 40F, 40G, 40H, 40I), as a function at least of the identified passenger category, and
- transmitting (130) the command to the passenger service equipment item (40A, 40B, 40C, 40D, 40E, 40F, 40G, 40H, 40I) via the generating module (75),
the generating step (120) including computing, via the generating module (75), for each passenger category, a number of passengers (49) categorized in the category, determining a majority passenger category from the computed numbers of passengers (49) and generating the command as a function of the majority passenger category.

10. A computer program comprising software instructions which, when executed by a control device according to any one of claims 1-6 or a motor vehicle according to claim 7 or 8, carry out a method according to the preceding claim.
